# EUROPÄISCHE PATENTANMELDUNG

(11) **EP 1 834 682 A1**
(43) Veröffentlichungstag der Anmeldung: **19.09.2007**
(21) Anmeldenummer: 06005213.1
(22) Anmeldetag: 14.03.2006
(51) Int. Cl.: B01D 35/06, B01D 33/00

(54) **Vorrichtung und Verfahren zur Filtration**

(71) Anmelder: BOKELA Ingenieurgesellschaft für mechanische Verfahrenstechnik mbH, 76131 Karlsruhe (DE)
(72) Erfinder: Bott, Reinhard Alfred, Dr., 76337 Waldbronn (DE); Langeloh, Thomas Karl Uwe, Dr., 69242 Mühlhausen (DE); Habich, Uwe, Dr., 52078 Aachen (DE)
(74) Vertreter: Wunderlich, Rainer

(57) **Zusammenfassung**

Die Erfindung betrifft eine Vorrichtung und Verfahren zur Filtration mit einem umlaufenden Filtermedium. Es ist eine Filtrationszone vorgesehen, in welcher Partikel einer Suspension an dem Filtermedium zu einem Filterkuchen anfiltrierbar sind. Weiterhin sind eine Entfeuchtungszone, in welcher der Filterkuchen auf dem Filtermedium entfeuchtet und/oder waschbar ist, eine Abnahmezone, in welcher der Filterkuchen vom Filtermedium abnehmbar ist, und eine Regenerationszone vorgesehen, in welcher das Filtermedium regenerierbar ist. Zur Verbesserung der Filtration bei Suspensionen mit magnetisierbaren Partikeln ist eine Magneteinrichtung angeordnet, durch welche in zumindest einer der Zonen ein Magnetfeld zum Behandeln der Suspension, des Filtermediums und/oder des Filterkuchens erzeugbar ist.

## Beschreibung

Die Erfindung betrifft eine Vorrichtung zur Filtration gemäß dem Oberbegriff des Anspruchs 1 sowie ein Verfahren zur Filtration gemäß dem Oberbegriff des Anspruchs 7.

Eine gattungsgemäße Vorrichtung zur Filtration mit einem kontinuierlich oder diskontinuierlich bewegten Filtermedium umfasst eine Filtrationszone, in welcher Partikel einer Suspension an dem Filtermedium zu einem Filterkuchen anfiltrierbar sind, eine Entfeuchtungszone, in welcher der Filterkuchen auf dem Filtermedium entfeuchtbar und/oder waschbar ist, eine Abnahmezone, in welcher der Filterkuchen von dem Filtermedium abnehmbar ist, und eine Regenerationszone, in welcher das Filtermedium regenerierbar ist.

Ein entsprechendes gattungsgemäßes Verfahren zur Filtration einer Suspension umfasst die Verfahrensschritte:
- Anfiltrieren von Partikeln aus der Suspension zu einem Filterkuchen an einem Filtermedium;
- Entfeuchten und/oder Waschen des gebildeten Filterkuchens auf dem Filtermedium;
- Abnehmen des Filterkuchens von dem Filtermedium und
- Regenerieren des Filtermediums.

Derartige Vorrichtungen und Verfahren zur Fest-Flüssig-Trennung sind in vielen Bereichen im Einsatz. Häufig werden dabei auch Suspensionen mit magnetischen oder magnetisierbaren Partikeln behandelt, etwa bei der Eisenerzaufbereitung.

Der Einsatz von magnetischen Feldern ist in der Aufbereitung fester Stoffe seit Langem bekannt. Meist handelt es sich bei diesen Anwendungen um Sortierprozesse, bei denen eine Kraftwirkung der Magnetfelder auf magnetische Dipole ausgenutzt wird. Die magnetischen Dipole entstehen, sobald Feststoffpartikel in ein äußeres Magnetfeld eingebracht werden.

Weiter ist es bei der so genannten Nasssortierung bekannt, in einem Prozessraum eine Matrix aus weichmagnetischem Material anzuordnen. Diese Matrix aus magnetischem Material kann dann von einer Suspension durchströmt werden, wobei sich magnetische Partikel an dem Matrixmaterial anlagern und festgehalten werden. Diese Scheider müssen in regelmäßigen Abständen bei abgeschaltetem Magnetfeld gespült werden, so dass das separierte Material weiterhin als Suspension vorliegt.

Der Erfindung liegt die Aufgabe zugrunde, eine Vorrichtung und ein Verfahren zur Filtration anzugeben, welche eine verbesserte Fest-Flüssig-Trennung bei Suspensionen mit magnetischen oder magnetisierbaren Partikeln erlaubt.

Die Aufgabe wird nach der Erfindung zum einen mit einer Vorrichtung mit den Merkmalen des Anspruchs 1 und zum anderen mit einem Verfahren mit den Merkmalen des Anspruchs 7 gelöst. Bevorzugte Ausgestaltungen der Erfindung sind in den jeweils abhängigen Ansprüchen angegeben.

Die erfindungsgemäße Vorrichtung ist dadurch gekennzeichnet, dass eine Magneteinrichtung vorgesehen ist, durch welche in zumindest einer der Zonen ein Magnetfeld zur Behandlung der Suspension, des Filtermediums und/oder des Filterkuchens erzeugbar ist. Durch den Einsatz eines oder mehrerer Magnetfelder, die hintereinander oder überlagert angeordnet werden können, kann die Filtrationsgeschwindigkeit und/oder die Entfeuchtung des gebildeten Filterkuchens gezielt beeinflusst und verbessert werden. Der Einsatz von Magnetfeldern kann dabei alternativ oder in Kombination mit bekannten chemischen Filtrationshilfsmethoden, wie Flockungsmitteln und Entwässerungshilfsmitteln, und/oder physikalischen und/oder apparatetechnischen Methoden erfolgen, wie zum Beispiel der Erhöhung der Druckdifferenz, Verlängerung der Steuerzeiten, Zugabe von Filterhilfsmitteln, intensive Tuchreinigung und gegebenenfalls den Einsatz von Presswalzen.

Im Bereich der Kuchenbildung kann durch Einsatz von Magnetfeldern der Kuchenaufbau, das heißt die Gestaltung der Porenstruktur, gezielt beeinflusst werden. So können die Partikel beschleunigt zum Filtermedium bewegt werden, was zu einer frühzeitigen Kuchenbildung und damit zu klareren Filtraten führen kann. Denn in der Regel sind die Poren des Filtermediums kleiner als die größten Partikel, aber bedeutend größer als die kleinsten Partikel in der Suspension, deren Größe häufig bis in den Submikronbereich reicht. Die Kuchenbildung hängt deshalb auch von einer Brückenbildung der Partikel über den Poren des Filtermediums ab. Das Filtermedium kann dabei sowohl ein Filtertuch aus einem Gewebe, Filz etc. oder eine Membran sein. Sobald sich eine erste stabile Partikelschicht auf dem Filtermedium ausgebildet hat, werden nachfolgende Partikel im beziehungsweise auf dem Filterkuchen abgeschieden. Der Kuchen übernimmt dabei die Aufgabe des Filtermediums. Eine schnelle, gezielte Bildung dieser stabilen ersten Grundschicht kann daher das Filtrationsergebnis positiv beeinflussen.

Andererseits können nach der Erfindung durch das Magnetfeld Partikel auch gezielt vom Filtermedium ferngehalten werden, um so einen guten Filtratfluss bei geringem Durchströmungswiderstand zu erreichen. Vor dem Filtermedium kann also ein absto-βendes Magnetfeld erzeugt werden, welches einem Zusetzen des Filtermediums durch Partikel entgegenwirkt.

Eine besonders zuverlässige und kostengünstige Ausgestaltung der Erfindung liegt darin, dass die Magneteinrichtung mindestens einen Permanentmagneten aufweist. Dieser arbeitet ohne Energiebedarf. Der Permanentmagnet kann fest oder veränderlich positionierbar angeordnet werden, um dadurch die Wirkung der Magnetkräfte zu steuern. Der Permanentmagnet kann auch schaltbar sein, etwa durch Veränderung seiner Position zum Joch.

Alternativ oder in Kombination hierzu ist nach der Erfindung vorgesehen, dass die Magneteinrichtung mindestens einen Elektromagneten aufweist und dass eine Steuereinrichtung zur Steuerung des Elektromagneten vorgesehen ist. Der Einsatz eines Elektromagneten erlaubt ein einfaches Abschalten des Magnetfeldes, was insbesondere zu Reinigungs- und Wartungszwecken vorteilhaft ist. Mittels der erfindungsgemäßen Steuereinrichtung kann zudem ein Magnetfeld je nach Anwendungsfall geändert und eingestellt werden. Im Gegensatz zum elektrischen Feld treten magnetische Pole immer nur als Dipole auf. Aufgrund dieses Dipolcharakters reicht das Vorhandensein eines starken Magnetfeldes nicht notwendigerweise zum Erreichen einer Kraftwirkung auf ein magnetisierbares Teilchen aus. Vielmehr muss entlang der räumlichen Ausdehnung des Teilchens eine Zunahme der Feldstärke (Feldgradient) in einer Raumrichtung vorhanden sein, damit eine Seite des Dipols stärker angezogen wird als die andere abgestoßen wird. Die Kraft ist dabei proportional zum Gradient des Feldes und zur Magnetisierung des Partikels. Da die Magnetisierung meist proportional zur Magnetfeldstärke H ist, ergibt sich für die Kraft eine Proportionalität zum Produkt aus Magnetfeldstärke x Gradient der Feldstärke.

In diesem Zusammenhang kann durch die Überlagerung von Magnetfeldern gezielt oder örtlich fokussiert auf den Filtrationsvorgang Einfluss genommen werden.

In homogenen magnetischen Feldern, also bei Gradienten 0, existiert keine Kraft auf einen magnetischen Dipol, wohl aber ein Drehmoment, das eine Ausrichtung der Dipole in Richtung der Feldlinie bewirkt. Magnetisierbare Partikel richten sich deshalb mit ihrer längsten Hauptachse entlang der Feldlinien aus. Bei ausreichend hoher Teilchendichte ziehen sich Pole entlang der Feldlinie benachbarter Teilchen an, was zur Bildung von Ketten aus Einzelpartikeln in Feldlinienrichtung führt. Mit einer derartigen Magnetfeldbildung können relativ offenporige Filterkuchen gebildet werden. Dies ist positiv für eine hohe Durchflussleistung und eine verminderte Zusetzung des Filtermediums. Dies gilt insbesondere für flächige Partikelformen, welche ohne Magnetfeld zu einer dachziegelartigen Abdeckung der Poren des Filtermediums neigen und damit einen Aufbau eines durchlässigen Filterkuchens verhindern.

Durch entsprechende Steuerung des Magnetfeldes kann zunächst eine sehr offenporige Grundschicht an das Filtermedium anfiltriert werden. Anschließend kann für den weiteren Aufbau der oberen Filterkuchenschichten das Magnetfeld entsprechend abgeändert, insbesondere abgeschwächt, werden, so dass sich dann feinere Poren bilden können. Ein derartiger Filterkuchen mit einer relativ offenporigen Grundschicht lässt sich leichter vom Filtermedium abnehmen und ist weniger anfällig für eine Rissbildung bei einer nachfolgenden Kuchenentfeuchtung mittels eines Gases.

Weiter ist es nach der Erfindung bevorzugt, dass ein Magnetpol auf einer Filtratseite und/oder einer Suspensionsseite des Filterkuchens angeordnet ist. Beispielsweise können auf der vom Filterkuchen abgewandten Seite des Filtermediums, der so genannten Filtratseite, magnetisierbare Weicheisenstrukturen vorgesehen sein. Diese können beispielsweise magnetische Stützgewebe des Filterkuchens aus Draht oder mechanisch bearbeitete Platten sein. Weiterhin kann ein Magnetpol auf der Filterkuchen- oder Suspensionsseite des Filtermediums angeordnet sein, um magnetisierbare Partikel zunächst zurückzuhalten und so die Kuchenbildung zu verzögern. Der Magnetpol kann dabei flächig oder linienförmig entlang des Filtermediums als Platte oder Stange angeordnet sein.

Eine besonders gute Wirkung wird nach der Erfindung dadurch erzielt, dass durch die Magneteinrichtung ein Magnetfeld erzeugbar ist, welches im Wesentlichen senkrecht oder parallel zum Filtermedium ausgebildet ist. Diese Ausrichtung des Magnetfeldes hängt dabei von der Art der zu filtrierenden Partikel ab. Dabei sind ferromagnetische und paramagnetische Partikel von diamagnetischen Partikeln zu unterscheiden. Ferromagnetische Partikel stellen gut magnetisierbare Stoffe dar, wie beispielsweise Eisen, Kobalt, Nickel und einige Mineralien wie Magnetit. Paramagnetische Partikel sind schwach magnetisierbare Stoffe, wie etwa eine Vielzahl von Mineralien, beispielsweise Hämatit. Während ferromagnetische und paramagnetische Partikel von magnetischen Polen angezogen werden, also eine positive Suszeptibilität aufweisen, werden diamagnetische Stoffe von magnetischen Polen abgestoßen. Man spricht hier von einer negativen Suszeptibilität. Diamagnetische Stoffe sind etwa Kupfer, Silber oder Kochsalz. Zum Verhindern einer dachziegelartigen Abdeckung der Poren des Filtermediums ist bei diesen diamagnetischen Partikeln ein Magnetfeld parallel zum Filtermedium aufzubauen, während bei den ferromagnetischen und paramagnetischen Stoffen zu diesem Zweck das Magnetfeld etwa senkrecht zum Filtermedium auszurichten ist.

Grundsätzlich kann die erfindungsgemäße Magneteinrichtung bei allen herkömmlichen Filtervorrichtungen zur Fest-Flüssig-Trennung zum Einsatz kommen. Das Filtermedium kann auf einem Träger montiert sein, welcher kontinuierlich oder taktweise bewegt wird. Besonders bevorzugt ist es nach der Erfindung, dass ein Drehfilter, insbesondere Scheibenfilter, Tellerfilter oder Trommelfilter, vorgesehen ist. Unter Drehfiltern werden dabei auch Bandfilter verstanden, bei welchen ein bandförmiges Filtermedium um beabstandete Trommeln oder Walzen umläuft.

Bei Scheibenfiltern ist die Filterfläche als Scheibe ausgebildet, die aus mehreren mit einem Filtermedium bespannten Filtersegmenten zusammengesetzt ist, die auf einer drehenden Welle befestigt sind. Bei Trommelfiltern befindet sich die Filterfläche auf der Mantelfläche einer drehenden und mit dem Filtermedium bespannten Trommel, die in einzelne Filterzellen unterteilt ist.

Bei Scheibenfiltern können speziell gestaltete Magnete beidseitig des Filtertroges angeordnet werden. Da die Scheibenfilter in der Regel nur eine Dicke von wenigen cm aufweisen, können die Magnetpole innerhalb oder außerhalb des Troges so angeordnet sein, dass ein Magnetfeld etwa senkrecht zur Filterfläche erzeugt wird. Weiterhin können die Filterzellen selbst Magnetpole aufweisen.

Bei Trommelfiltern ist zusätzlich eine Magnetanordnung innerhalb der Trommel möglich.

Durch Überlagerung von Magnetfeldern und/oder durch geeignete Oberflächengestaltung der Magnete, des Suspensionstroges sowie der Filterzellen können gezielt Feldlinienverläufe verdichtet und aufgeweitet werden. Zusätzliche Gitter zur Steuerung der Feldlinien innerhalb des Troges, im Filtermedium selbst sowie innerhalb der Filterzelle geben eine Vielzahl von Gestaltungsmöglichkeiten, um eine positive Wirkung der Magnetkräfte produktangepasst einzusetzen. Bei Scheibenfiltern können Permanentmagnete beispielsweise großflächig auf der Außenseite der Suspensionsbehälter angebracht werden. Die Position und Erstreckung des Magnetfeldes können an die Anfordernisse des Filtrierprozesses angepasst werden.

Alternativ kann zur Erzeugung des Magnetfeldes ein Elektromagnet mit einer oder mehreren Spulen verwendet werden. Der Eisenkreis des Magneten und die Geometrie der Spulen sind an die Anfordernisse des Filtrationsprozesses anzupassen. Die Polschuhe werden zum Beispiel beim Scheibenfilter an die Geometrie der Filterkammern angepasst. Der Elektromagnet kann über den elektrischen Strom variabel ein- und ausgeschaltet werden und die Feldstärke kann während des Filtrierprozesses verändert werden.

Bei Trommelfiltern kann die Abnahme eines Filterkuchens aus paramagnetischem oder ferromagnetischem Material mit Hilfe einer Magnettrommel (feststehendes Polsystem, drehbarer Mantel) oder einer Magnetbandrolle mit einem mitdrehenden Polsystem erfolgen, die in der Abnahmezone mit ihren Achsen parallel zur Trommelfilterfläche angeordnet sind. Beim Einsatz einer Magnettrommel löst sich das abgenommene Material vom Trommelmantel sobald es sich durch den Weitertransport durch den drehenden Trommelmantel ausreichend weit vom Magnetsystem der Trommel entfernt hat. Beim Einsatz einer Magnetbandrolle wird das abgenommene Material durch ein um die Bandrolle umlaufendes Förderband abtransportiert.

Die Filterkuchenabnahme kann erfindungsgemäß auch durch ein mit Magnetfeldern angetriebenes Federelement durchgeführt werden. Die Funktion erfolgt aufgrund eines unterhalb des Filtermediums gelagerten Metallstabes oder Metallstreifens, der sich bewegt, wenn sich die Magnetkraft ändert. So kann beispielsweise in der Kuchenabnahmezone ein über der Filterzelle gelagerter Magnet den Metallstab und somit das Filtermedium samt Kuchen anziehen. Hierdurch werden die Haftkräfte des Kuchens gelockert, so dass dieser besser abfällt. In einer weiteren Gestaltung kann für nichtmagnetische Filterkuchen zum Beispiel die Kuchenabnahme durch Einarbeitung eines magnetisierbaren Metalls in das Filtertuch bewerkstelligt werden.

Das erfindungsgemäße Verfahren zur Filtration ist dadurch gekennzeichnet, dass zumindest während einem Verfahrensschritt ein Magnetfeld erzeugt wird, welches auf die Suspension, das Filtermedium und/oder den Filterkuchen einwirkt.

Insbesondere bei der Einwirkung eines Magnetfeldes bei dem Anfiltrieren des Filterkuchens lassen sich sehr positive Effekte erzielen, insbesondere eine definierte Einstellung der Porenstruktur des Filterkuchens. Durch eine entsprechend gestaltete Porenstruktur lässt sich die Kompressibilität und damit das Porenentleerungsverhalten beeinflussen. Je offener und größer die Poren desto leichter und schneller lassen sich die Poren von Restflüssigkeit entleeren. Durch eine gezielte Vorkompaktierung, die bereits zu Beginn der Kuchenbildung auf den Filterkuchen einwirken kann, kann in der folgenden Entfeuchtungsphase eine Rissbildungsneigung verringert, im Idealfall sogar ausgeschlossen werden. Weiterhin kann bei sehr feinkörnigen Haufwerken, bei denen eine hohe Kapillarkraft eine Porenentleerung erschwert oder praktisch verhindert, eine Porengröße derart gestaltet werden, dass grobe und weitgehend zum Filtermedium durchreichende Poren entstehen und somit eine Entfeuchtung überhaupt erst ermöglicht wird.

Dabei ist es nach der Erfindung bevorzugt, dass beim Anfiltrieren des Filterkuchens am Filtermedium ein Magnetfeld erzeugt wird, welches Partikel der Suspension verstärkt zum Filterkuchen anzieht oder davon abstößt. Durch ein verstärktes Anziehen wird die Filterkuchenbildung beschleunigt, was sich positiv auf die Klarheit des Filtrates auswirken kann. Ein Abstoßendes Magnetfeld hingegen kann einem frühzeitigen Zusetzen des Filtermediums entgegenwirken, so dass eine hohe Durchflussleistung erreichbar ist.

Eine gezielte Beeinflussung des Filterkuchens wird erfindungsgemäß dadurch erreicht, dass eine Feldstärke des Magnetfeldes während des Anfiltrierens des Filterkuchens definiert geändert wird.

Weiterhin ist es nach der Erfindung bevorzugt, dass beim Abnehmen des Filterkuchens vom Filtermedium ein Magnetfeld erzeugt wird, welches ein Lösen des Filterkuchens vom Filtermedium unterstützt. Durch eine entsprechende Magnetfeldausrichtung kann einerseits eine abstoßende Magnetkraft auf der Filtratseite des Filtermediums erzeugt werden oder alternativ oder unterstützend etwa durch eine Abnahmerolle eine anziehende Magnetkraft auf den Filterkuchen ausgeübt werden.

Die Erfindung wird nachfolgend anhand von bevorzugten Ausführungsbeispielen weiter erläutert, welche schematisch in den beigefügten Zeichnungen dargestellt sind. In den Zeichnungen zeigen:
- Fig. 1: eine Vorderansicht eines erfindungsgemäßen Trommel-filters;
- Fig. 2: eine Seitenansicht des Trommelfilters von Fig. 1;
- Fig. 3: eine Vorderansicht eines erfindungsgemäßen Scheibenfilters;
- Fig. 4: eine Seitenansicht des Scheibenfilters von Fig. 3.

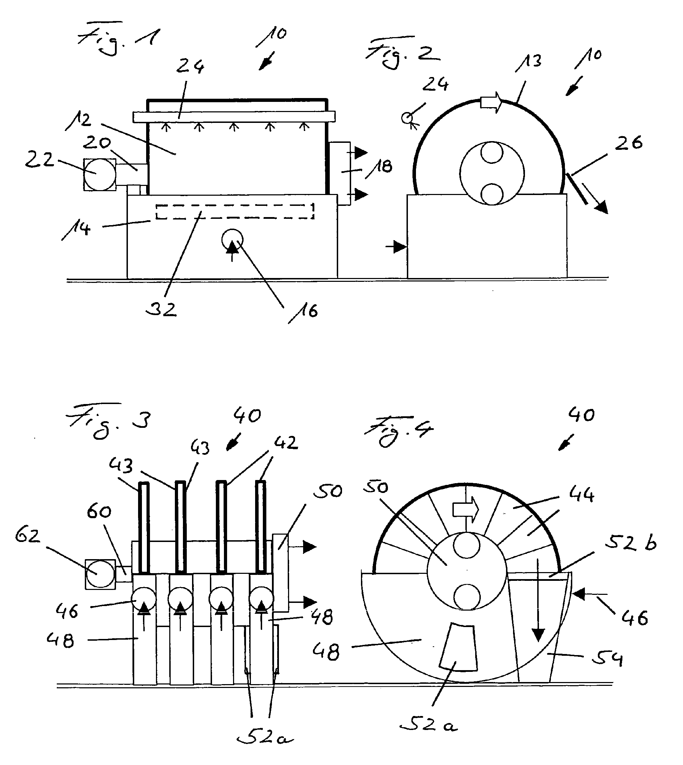

Ein erfindungsgemäßer Trommelfilter 10 gemäß den Figuren 1 und 2 weist eine zylindrische Trommel 12 auf, an deren Außenumfang ein Filtermedium 13 aufgespannt ist. Das Filtermedium 13 kann insbesondere ein Filtergewebe sein. In einem unteren Abschnitt durchläuft die über einen Motor 22 und eine Welle 20 angetriebene Trommel 12 einen Suspensionstrog 14. Über einen Zulauf 16 wird die zu behandelnde Suspension in den Suspensionstrog eingeführt.

Aufgrund einer anliegenden Druckdifferenz wird in einer Filtrationszone Flüssigkeit aus der Suspension durch das Filtermedium 13 hindurch abgesogen und als Filtrat über einen Filtratablauf 18 abgeführt. Hierbei entsteht an der Oberseite des Filtermediums 13 ein Filterkuchen aus Feststoffpartikeln. Über eine plattenförmige Magneteinrichtung 32 im Suspensionstrog 14 und einem zugehörigen Magnetpol innerhalb der Trommel 12 wird in der Filtrationszone ein Magnetfeld senkrecht zum Filtermedium erzeugt, welches das Anlagern ferromagnetischer Partikel in der Suspension am Filtermedium 13 verstärkt und beschleunigt. Die verstärkte Anlagerung einer Grundschicht am Filtermedium 13 sorgt für ein besonders klares Filtrat, da aufgrund der verstärkten Brückenbildung über den Poren des Filtermediums 13 ein besserer Rückhalteeffekt auch gegenüber feinen Partikeln schnell erreicht wird.

Nach der Filtrationszone taucht das Filtermedium 13 an der Trommel 12 aus der Suspension auf und durchläuft eine Entfeuchtungszone. Durch die anliegende Druckdifferenz kann verbliebene Restflüssigkeit im angelagerten Filterkuchen in das Innere der Trommel 12 abgesogen werden, wobei Umgebungsluft in die entleerten Poren im Filterkuchen einströmen kann. Zusätzlich kann eine Waschung des Filterkuchens durch Aufsprühen einer Waschflüssigkeit mittels einer röhrenförmigen Wascheinrichtung 24 erfolgen.

Nach ausreichender Entfeuchtung des gebildeten Filterkuchens kann dieser in einer Abnahmezone über eine Rakel 26 abgenommen und einer Weiterverarbeitung zugeführt werden. Nach der Abnahme des Filterkuchens durchläuft das Filtermedium eine Regenerationszone, in welcher das Filtermedium 13 speziell gereinigt werden kann. In einer einfachen Ausführungsform kann die Regenerationszone auch ein freier Abschnitt sein, in welcher das Filtermedium Gelegenheit hat, ohne zusätzliche Einrichtungen zu trocknen oder abzutropfen.

In den Figuren 3 und 4 ist ein erfindungsgemäßer Scheibenfilter 40 mit insgesamt vier Filterscheiben 42 dargestellt. Die vier Filterscheiben 42 sind auf einer gemeinsamen Welle 60 angebracht und über einen Motor 62 drehend angetrieben. Den einzelnen Filterscheiben 42 ist jeweils in separater Suspensionstrog 48 zugeordnet, welche jeweils über einen jeweiligen Zulauf 46 kontinuierlich mit Suspension verfüllt werden.

Eine einzelne Filterscheibe 42 besteht aus einer Vielzahl von segment- oder kuchenförmigen Filterzellen 44, welche jeweils mit einem Filterbeutel als Filtermedium 43 bespannt sind.

Bei Durchlauf durch den Suspensionstrog 48 bildet sich aufgrund einer anliegenden Druckdifferenz an den Seitenflächen der Filterzellen 44 ein Filterkuchen aus Feststoffpartikeln der Suspension. Flüssigkeit wird aus dem Inneren der Filterzellen 44 als Filtrat über einen mittigen Filtratablauf 50 abgeführt. In dieser Filtrationszone wird ein Magnetfeld durch zwei seitlich an die Suspensionsträger 48 angeordnete, segmentförmige Magneteinrichtung 52a erzeugt, welche nur am letzten Suspensionstrog 48 dargestellt sind.

Nach Auftauchen aus der Suspension durchlaufen die Filterzellen 44 Umgebungsluft, wobei durch die weiter anliegende Druckdifferenz eine Entfeuchtung des gebildeten Filterkuchens in einer Entfeuchtungszone erfolgt. Über eine nicht dargestellte Rakel in Kombination mit einer Magneteinrichtung 52b, welche ein Magnetfeld zum verbesserten Abheben des Filterkuchens aus magnetischen Partikeln erzeugt, wird der abgehobene Filterkuchen in einer Abnahmezone abgelöst und über einen Schacht 54 nach unten abgeführt. Das Magnetfeld der Magneteinrichtung 52 ist dabei so einstellbar, dass sich die Kuchenablösung vom Filtermedium 43 verbessert und auch festgesetzte magnetische Teilchen leichter von dem Filtermedium gelöst werden können.

## Patentansprüche

1. Vorrichtung zur Filtration mit einem kontinuierlich oder taktweise bewegten Filtermedium (13, 43), wobei
- eine Filtrationszone, in welcher Partikel einer Suspension an dem Filtermedium (13, 43) zu einem Filterkuchen anfiltrierbar sind,
- eine Entfeuchtungszone, in welcher der Filterkuchen auf dem Filtermedium (13, 43) entfeuchtbar und/oder waschbar ist,
- eine Abnahmezone, in welcher der Filterkuchen vom Filtermedium (13, 43) abnehmbar ist, und
- eine Regenerationszone vorgesehen sind, in welcher das Filtermedium (13, 43) regenerierbar ist,
**dadurch gekennzeichnet ,**
**dass** eine Magneteinrichtung (32, 52) vorgesehen ist, durch welche in zumindest einer der Zonen ein Magnetfeld zur Behandlung der Suspension, des Filtermediums (13, 43) und/oder des Filterkuchens erzeugbar ist.

2. Vorrichtung nach Anspruch 1,
**dadurch gekennzeichnet ,**
**dass** die Magneteinrichtung (32, 52) mindestens einen Permanentmagneten aufweist.

3. Vorrichtung nach Anspruch 1 oder 2,
**dadurch gekennzeichnet ,**
**dass** die Magneteinrichtung (32, 52) mindestens einen Elektromagneten aufweist und
**dass** eine Steuereinrichtung zur Steuerung des Elektromagneten vorgesehen ist.

4. Vorrichtung nach einem der Ansprüche 1 bis 3,
**dadurch gekennzeichnet ,**
**dass** ein Magnetpol auf einer Filtratseite und/oder einer Suspensionsseite des Filtermediums (13, 43) angeordnet ist.

5. Vorrichtung nach einem der Ansprüche 1 bis 4,
**dadurch gekennzeichnet ,**
**dass** durch die Magneteinrichtung (32, 52) ein Magnetfeld erzeugbar ist, welches im Wesentlichen senkrecht oder parallel zum Filtermedium (13, 43) ausgebildet ist.

6. Vorrichtung nach einem der Ansprüche 1 bis 5,
**dadurch gekennzeichnet ,**
**dass** diese als Drehfilter, insbesondere als Trommelfilter (10), Tellerfilter oder Scheibenfilter (40), ausgebildet ist.

7. Verfahren zur Filtration einer Suspension, mit den Verfahrensschritten:
- Anfiltrieren von Partikeln aus der Suspension zu einem Filterkuchen an einem Filtermedium (13, 43),
- Entfeuchten und/oder Waschen des gebildeten Filterkuchens auf dem Filtermedium (13, 43),
- Abnehmen des Filterkuchens von dem Filtermedium (13, 43) und
- Regenerieren des Filtermediums (13, 43),
**dadurch gekennzeichnet,**
**dass** zumindest während einem Verfahrensschritt ein Magnetfeld erzeugt wird, welches auf die Suspension, das Filtermedium (13, 43) und/oder den Filterkuchen einwirkt.

8. Verfahren nach Anspruch 7,
**dadurch gekennzeichnet ,**
**dass** beim Anfiltrieren des Filterkuchens am Filtermedium (13, 43) ein Magnetfeld erzeugt wird, welches Partikel der Suspension verstärkt zum Filtermedium (13, 43) anzieht oder davon abstößt.

9. Verfahren nach Anspruch 7 oder 8,
**dadurch gekennzeichnet,**
**dass** eine Feldstärke des Magnetfeldes, insbesondere während des Anfiltrierens des Filterkuchens, definiert geändert wird.

10. Verfahren nach einem der Ansprüche 1 bis 9,
**dadurch gekennzeichnet ,**
**dass** beim Abnehmen des Filterkuchens vom Filtermedium (13, 43) ein Magnetfeld erzeugt wird, welches ein Lösen des Filterkuchens vom Filtermedium (13, 43) unterstützt.
